Europäisches Patentamt

European Patent Office

Office européen des brevets

(19)

(11) **EP 1 729 527 A2**

(12) **EUROPEAN PATENT APPLICATION**

(43) Date of publication:
**06.12.2006 Bulletin 2006/49**

(51) Int Cl.:
*H04N 9/69* (2006.01)          *H04N 17/02* (2006.01)

(21) Application number: **06250581.3**

(22) Date of filing: **03.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.06.2005 KR 2005046722**

(71) Applicant: **LG Electronics Inc.**
**Yongdungpo-gu**
**Seoul (KR)**

(72) Inventors:
• **Bae, Mun Sik**
**Pohang-si**
**Gyeongsangbuk-do (KR)**
• **Song, Woo Jin**
**Gangnam-gu**
**Seoul (KR)**
• **Hwang, Kyu Young**
**Dept.of Electr. Engineering**
**Nam-gu**
**Pohang-si**
**Gyeongsangbuk-do (KR)**

• **Park, Jong Jun**
**Gyeongsan-si**
**Gyeongsangbuk-do (KR)**
• **Kim, Kwang Hoon**
**Dept.of Electrical Engineering**
**Nam-gu**
**Pohang-si**
**Gyeongsangbuk-do (KR)**
• **Lee, Tae Hee**
**Dept.of Electrical Engineering**
**Nam-gu**
**Pohang-si**
**Gyeongsangbuk-do (KR)**
• **Choi, Young Seok**
**Dept.of Electrical Engineering**
**Nam-gu**
**Pohang-si**
**Gyeongsangbuk-do (KR)**

(74) Representative: **Camp, Ronald et al**
**Kilburn & Strode**
**20 Red Lion Street**
**London WC1R 4PJ (GB)**

(54) **Device and method for gamma correction of display apparatus**

(57)    A device and method of adjusting tones of a display apparatus includes the steps of: sampling tone values according to voltage levels of received image signals; generating a tone adjustment curve using the sampled tone values; and adjusting tones of outputted images based on the tone adjustment curve. This resampling can eliminate contours which would otherwise be generated in a display where the adjacent brightness input levels are reproduced as a single brightness level on the display by diffusing the associated error to adjacent pixels.

FIG. 2

EP 1 729 527 A2

**Description**

The present invention relates to a display apparatus. It more particularly relates to a device and a method of adjusting tone of a display apparatus, which are capable of adjusting images according to characteristics of a display apparatus.

With improvement of consumers' lives, multi-media, large screen, high quality, and product designs, etc., which would not have been considered in the concept of prior art TV sets, appear as important factors for purchasing TV sets. According to consumers' desires, LCD projection TVs are market leaders in high quality TVs with large screens. With development of display apparatuses, TV signal transmission methods have also developed such that digital TV broadcasting is possible. On the other hand, digital TV broadcasting makes bi-directional information exchanges possible, such that new broadcasting services, high quality and high definition broadcasts are possible. Therefore, it is advantageous for a digital TV with a large screen to have a method for adjusting tone to obtain a more sophisticated product and improved quality.

Gamma correction serves to adjust tones of images so that users can watch better quality images. To achieve such a goal, gamma correction should be considered in various factors such as characteristics of a display apparatus and playing images. Gamma correction improves image quality as image tones are adjusted on the basis of compensation of non-linear characteristics of a display apparatus and environments of playing images. In order to achieve gamma correction, gamma characteristics of a display apparatus must be analyzed because gamma characteristics of the display apparatus are different according to the kind of display apparatus. Therefore, the display apparatuses need devices for adjusting tones to comply with themselves. Thus, different display apparatuses must include different devices for adjusting tones, respectively.

Digital gamma correction means processes serving to replace digital signal values with other digital signal values. While performing such processes, tones are excessively amplified due to a restriction of the bit-number of digital signals. Since gamma correction of a digital signal is identical to quantization from given tones to new tones, the excessive amplification of tones is referred to as quantization noise. The quantization noise is also called contour phenomenon since the noise appears on the screen like contours. Especially, the quantization noise distinctly appears at areas in which brightness smoothly changes.

The present invention seeks to provide an improved device and a method of adjusting tones of a display apparatus.

Embodiments of the invention can provide a device and a method of adjusting tones of a display apparatus which can be applied to various display apparatuses.

Embodiments of the invention can provide a device and a method of adjusting tones of a display apparatus which can prevent quantization noise.

In accordance with the invention, a method of adjusting tones of a display apparatus comprises the steps of sampling tone values according to voltage levels of received image signals; generating a tone adjustment curve using the sampled tone values; and adjusting tones of outputted images based on the tone adjustment curve.

The sampling step may include the steps of: determining a number of tone values to be sampled; and sampling the tone values according to voltage levels of the received image signals using the determined number.

The generating step may include the step of generating the tone adjustment curve as the sampled tone values are substituted into a predetermined equation.

The method may further include the steps of: quantizing the image signals of 16bits/pixel to data of 10bits/pixel; and diffusing error of the image signals of a corresponding pixel to adjacent pixels. Here, the error of the image signals is a lower 5 bits of the image signals of 16 bits.

In another aspect of the invention, a device for adjusting tones of a display apparatus includes: a controller arranged to sample tone values according to voltage levels of received image signals, and to generate tone adjustment curves using the sampled tone values; and a curve fitting part arranged to adjust tones of outputted images based on the generated tone adjustment curve.

The device may further include: a quantizer arranged to quantize the image signals of 16bits/pixel outputted from the curve fitting part to data of 10bits/pixel; and an error diffusion unit arranged to diffuse an error of the image signals of a corresponding pixel to adjacent pixels; an interface unit arranged to transmit the tone adjustment curve outputted from the controller to the curve fitting part; and a line buffer arranged to output image signals of 16bits/pixel after receiving the image signals from the curve fitting part.

In further another aspect of the present invention, a method of adjusting tones of a display apparatus includes the steps of: sampling respective tones of red (R), green (G), and blue (B) signals according to respective voltage levels of the R, G, and B signals which have been received; generating tone adjustment curves corresponding to the respective R, G, B signals using the sampled tone values; storing the tone adjustment curves in a memory; and adjusting tones of the R, G, and B signals based on the stored adjustment tone curves.

In yet another aspect of the present invention, a device of adjusting tones of a display apparatus includes: a controller arranged to sample tone values of red (R), green (G) and blue (B) signals according to respective voltage levels of the R, G, and B signals which have been received, and to generate tone adjustment curves corresponding to the respective R, G, and B signals, using the sampled tone values; a memory arranged to store the tone adjustment curves therein; and a curve fitting part arranged to adjust tones of the R, G, and B signals based on the generated tone adjustment curves stored in the memory.

The curve fitting part may include a menu for changing/setting the tone adjustment curves.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG. 1 illustrates a schematic block diagram of a display apparatus including a device for adjusting tones according to the present invention;
FIG. 2 illustrates a schematic block diagram of the device for adjusting tones of FIG. 1;
FIG. 3 illustrates a linear tone graph;
FIG. 4 illustrates an improved tone graph;
FIG. 5 illustrates a schematic block diagram for describing error diffusion according to the present invention;
FIGs. 6A to 6B illustrate graphs showing gamma characteristics of various display apparatuses; and
FIG. 7 illustrates an example of a menu for setting a tone adjustment curve.

Wherever possible, the same reference numbers will be used throughout the drawings to refer to the same or like parts.

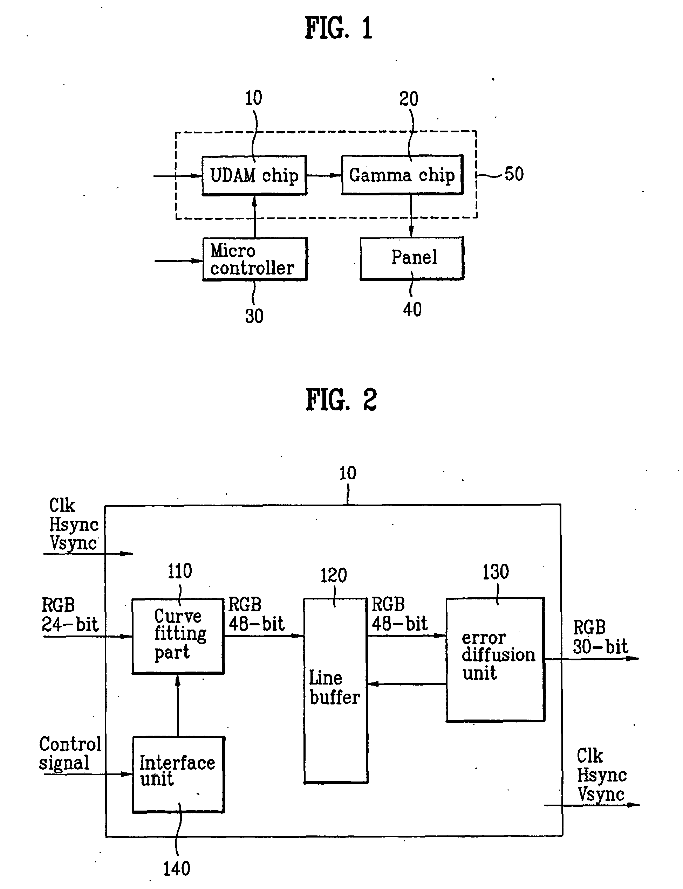

FIG. 1 illustrates a schematic block diagram of an LCD projection TV including a universal display adjustment module (UDAM) chip (10) embodying the present invention. In the present exemplary embodiment, a device for adjusting tones includes a universal display adjustment module (UDAM) chip 10 and UDAM software. The UDAM chip 10 and the UDAM software perform a correction error diffusion function and curve fitting function to obtain an optimum tone curve.

The UDAM chip 10 eliminates image contours generated after tones have been adjusted in various display environments (a TV, a monitor, a protection, a projector etc.), which employ an LCD, a PDP, etc. Such image contours are generated due to generation of quantization noise which is generated by tone depletion in a tone adjustment process. The UDAM chip 10 eliminates the quantization noise using a correction error diffusion algorithm and a curve-fitting algorithm. Although the present embodiment includes the correction error diffusion algorithm and the curve-fitting algorithm, only one of them need be employed to eliminate the quantization noise.

The UDAM chip 10 generates a look-up table (LUT) to compensate tones of the respective red (R), green (G), and blue (B), and stores the LUT therein. The UDAM chip 10 can change values of the LUT via communication with a micro-controller 30. To achieve such communication, the UDAM chip 10 is connected to a 4-wire serial interface.

The UDAM chip 10 implemented with ASIC inputs RGB signals of 24bits and outputs RGB signals of 30bits. The UDAM chip 10 has the bit numbers of input/output data to comply with a signal format of an LCD projection TV. Therefore, if the UDAM chip 10 is applied to a display apparatus whose input/output data format is different from that of the LCD projection TV, the bit number of input/output data of the UDAM chip 10 can be changed to comply with the display apparatus. In addition, resolution set to 1280x720 can be changed to higher resolution as a line-buffer size in the UDAM chip 10 is increased.

The UDAM chip 10 also includes an LUT for a tone curve as well as the correction error diffusion function as a primary function thereof. The UDAM chip 10 can arbitrarily change the LUT through the 4-wire serial interface. In order to perform such a correction of error diffusion, tone values included in the LUT must have precision of greater than 10bits. The UDAM chip 10 can store a tone curve having precision of 15bits in the LUT.

Since display apparatuses have different signal flows according to various usage objectives (a TV, a monitor, a projector, etc.), a position of a chip, which can be universally used in the display apparatuses, is strictly limited. However, since the UDAM chip 10, which performs a tone adjustment and correction error diffusion function related to the tone adjustment, is strictly related to characteristics of a display panel, the UDAM chip 10 must be within a driver board for driving the display panel, and also since all the display apparatuses regardless of their objectives must have, in general, a driver board for driving their display panels at the very front of the display panels, the UDAM chip 10 can be universally used for various display apparatuses.

As shown in FIG. 1, a driver board 50 of the LCD projection TV includes a gamma chip 20 such as a 'L3E07050KOB Gamma Chip' to adjust tones. The UDAM chip 10 is used such that the UDAM chip 10 is connected to the front of the prior art tone adjustment device (gamma chip) without a change of structure of the prior art driver board, and instead only the tone adjustment function is set to be disabled in the prior art tone adjustment device.

The UDAM software, which is driven by a micro-controller 30, samples tone data of RGB signals at a plurality of points, and then generates tone adjustment curves using the sampled values. For example, the tone data of RGB signals are sampled at 8 points (8 input levels), and then a tone adjustment curve is generated on the basis of the 8 sampled values. Tone adjustment curve information having a LUT format is outputted from the micro-controller 30 via RS-232 serial communication. Here, a 4-wire serial interface 140 receives the tone adjustment curve information from the micro-controller 40 and then transmits it to the UDAM chip 10.

A UDAM test board generates a tone adjustment curve using a micro-controller 30 of ATmel, Atmga 128. The RS-232 serial communication method can perform communication on the basis of only 1byte. Therefore, the UDAM software changes actual data of a scale of $2^{15}$ to a two bytes signal whose most significant bit is '0.' Afterwards, the UDAM software transmits the upper 1byte thereto first and then sends the lower 1byte thereto. On the other hand, since the RS-232 communication protocol recognizes $00000000_{(2)}$ as a communication stoppage signal, when the upper 1 byte is $00000000_{(2)}$, the protocol sends $11111111_{(2)}$ thereto, and when the lower 1byte is $00000000_{(2)}$, the protocol sends $11110000_{(2)}$ thereto twice.

Afterwards, the micro-controller 30 analyzes as to whether an inputted signal is an upper byte or a lower byte of the original signal. If the upper byte is $11111111_{(2)}$, the micro-controller 30 changes $11111111_{(2)}$ to $00000000_{(2)}$, and if the lower byte is $11110000_{(2)}$, the micro-controller 30 further determines as to whether next inputted signal is $11110000_{(2)}$ or $00000000_{(2)}$. When transmission of all data is finished, $11111111_{(2)}$ must be inputted. Namely, if $11111111_{(2)}$ has been inputted at a sequence where the upper byte is inputted, the micro-controller 30 recognized that the transmission of all data has finished.

After receiving all data based on the above-mentioned procedure, the micro-controller 30 stores the data in a memory, such as an EEPROM. Afterwards, the micro-controller 30 outputs all the data through the 4-wire serial communication. The 4-wire serial communication method has been described above. Substantially, a lower 3-wire is similar to serial peripheral interface (SPI) serial communication. The SPI serial communication is a serial communication standard for a local area and a fast synchronous serial communication method. The micro-controller 30 employs only a master mode of the SPI serial communication method for data transmission. The SPI serial communication is performed such that clocks are always generated by a master and data can be transmitted from the LSB or the MSB. The 4-wire communication standard is identical to the transmission method that data is transmitted from the MSB and to a mode that data is detected at the edges. Since ATmega 128, as a micro-controller, supports the communication standard, the 4-wire serial communication is performed using the above-method.

When a reset key of the micro controller board included in the UDAM test board is selected, tone adjustment curve information presently stored in an EEPROM is transmitted to the UDAM chip 10 through the 4-wire communication.

Internal structure of the UDAM chip 10 is described in detail on the basis of functions as follows.

FIG. 2 illustrates a schematic block diagram of inside the UDAM chip. A curve fitting part 110 includes a LUT memory which stores tone adjustment curves in an LUT format. The curve fitting part 110 receives RGB signals each of which is 8bits/pixel, and converts the received RGB signals to data each of which is 26bits/pixel based on the previously stored LUT of 16bits. Also, the curve fitting part 110 adjusts tones of the RGB signals based on the previously stored tone adjustment curves. Namely, the curve fitting part 110 reduces any distinctive differences of the tones such that contour phenomenon cannot be shown in images on the display.

A line buffer 120 receives the RGB signals outputted from the curve fitting part 110 through four lines and then stores the same therein. An error diffusion unit 130 performs error diffusion function for the images (RGB signals) from the line buffer 120 to eliminate contour of the images by quantization noises which are generated when tones are adjusted. The error diffusion unit 130 adds a lower 5bits of a pixel presently processed to perform error diffusion to peripheral pixels which are presently processed, and then outputs image signals of 10bits/pixel in which the lower 5bits of the presently processed pixel and 1bit for overflow are eliminated. The error diffusion part 130 outputs the RGB signals each of which is 10bits.

An interface unit 140 communicates with the driver board 50 and the external micro-controller 130 via four wires. Here, contents received by the interface unit 140 are tone adjustment curves which are made by an external program. On the other hand, contents of the LUT memory of the curve fitting part 110 are updated by communication of the interface unit 140.

A method for adjusting tones according to the present invention is described in detail below.

One of the most important factors in color is brightness. Namely, image quality is influenced by determination as to how long a color's tone, which is generated by a brightness difference, is continued. If the respective red, green and blue colors are monochrome, or the respective red, green and blue colors do not have brightness differences, it cannot be determined what objects are represented in the image. Therefore, there are various terms for the tone that express distinct aspects of an image, compared with brightness. Here, the tone means a gray level showing the levels of brightness and darkness. For example, gray scale is a distinctive term describing the concept of the tone. More specifically, such a gray scale including the darkest portion and the brightest portion together is used as a reference to determine the tones based on several levels into which brightness differences are divided.

Image signals precisely define their reference levels unlike other signals (for example, audio signals). Namely, the image signals need a rule to define how much brightness and how many levels (magnitudes) corresponding thereto are set. For example, black, references of the brightest and the darkest colors are set, such that levels of brightness can be linearly between the two references. When such a rule is not kept, if a broadcast station transmits images of a ski slope, which is brightly lit by sunshine, to users' display apparatuses, the displays apparatuses may display dark images of the ski slope.

As such, since a TV set, which converts electric signals to light, has a photoelectric conversion characteristic which is different from that of a camera which converts light to the electric signals, and has a non-linearity for the conversion, a compensation process, which is referred to a "gamma correction," is needed.

Gamma of a TV system must be compensated to play images that are taken by a camera. Such compensation is achieved in the camera. Gamma correction of a TV system serves to output signals such that light incident in the camera are proportional to brightness of the image tube. The light incident in the camera is linearly related to the camera output, and must be compensated by an exponent of 1/r. Here, such an exponent (1/r) is the gamma of a camera. Gamma index of a TV system is approximately 2.2.

Generally, since a CRT TV set is operated such that output luminance is not related to input voltage, if actual image signals are outputted without any processing, the TV set can display distorted images, such as dark images, thereon. Therefore, since all CRT TV sets have such a characteristic, if signals to be applied to the TV sets are corrected, users can watch distortion-corrected images through the display of the TV set.

Generally, gamma correction is employed to improve contrast of images when images cannot be displayed because the images are too bright or dark. For example, when objects in images cannot be distinguished because the images have dark portions, if a gamma value is decreased, the contrast of the dark portions is improved, and thus the objects can be distinctively shown on the display.

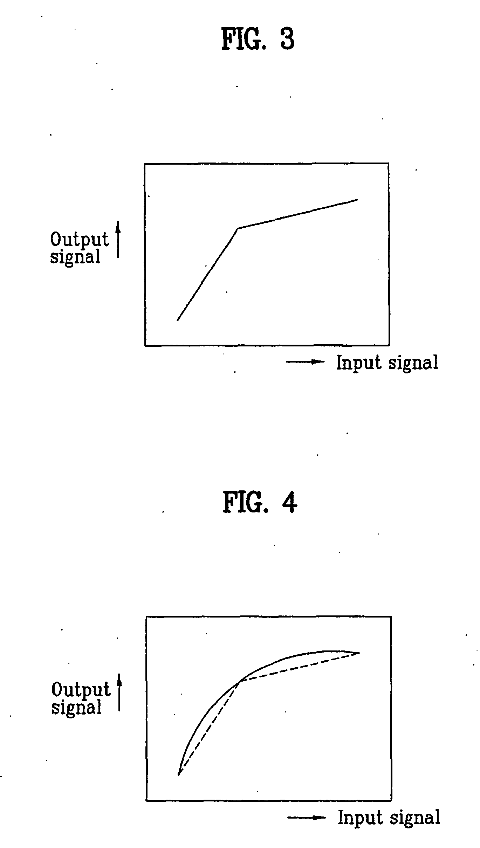

The prior art gamma correction is performed at 16 points such that respective values of data corresponding to RGB signals are adjusted. Gamma correction for an LCD projection TV is performed such that gamma values of RGB signals are basically adjusted at LCD saturation points and white/balance (W/B) is also adjusted. Gamma adjustment and W/B adjustment of adjacent grays are performed on the basis of the brightest points (16 grays) such that the W/B can be consistent across the total gray level range of images. Image patterns of 16 grays before adjustment shows that black and white signals are saturated and W/B is distorted at arbitrary portions. Since such gamma adjustment is performed at only 16 points, values between two adjacent points of the 16 points are obtained by linear interpolation. Therefore, as shown in FIG. 3, an inverse gamma correction curve as a piecewise linear approximation based on intervals can be obtained.

If such a correction curve is applied to a simulator and then checked with a 16 gray level pattern, it is easily appreciated that a banding effect (which is a phenomenon where tone is not smoothly changed and a boundary like a band is shown) is generated at a portion where a curve is sharply bent. Otherwise, the banding effect appears in images, like contour lines. After the measured gamma curves for 100 LCD projection TV sets were analyzed, it was concluded that the above-mentioned problems are mainly generated at dark portions of the images. Therefore, the gamma curve, which is expressed in a one dimensional equation form and piecewise linear form, must be improved to a curved line whose final shape is curved and whose input and output are 256 levels and 1024 levels (10bits), respectively.

Gamma correction for digital video signals means a process that a digital signal value is replaced with another digital signal value. In such a process, due to a limitation of the bit number of the digital signal, tone intervals after gamma correction may be excessively amplified. When gamma values of 16 tones are illustrated in a graph, tone values, which are different from each other, are identically expressed in the graph due to a depletion of bit allocation for approximately 100~256 bits. Therefore, quantization noises occur on the display.

The UDAM according to the present invention is an image process system to optimally adjust tones, and applied to all display apparatuses, such as LCDs, PDPs, DLPs, etc. The UDAM is divided into a UDAM chip and UDAM software. The UDAM chip 10 efficiently performs gamma correction and has a simple characteristic for an Input/Output interface such that data for the gamma correction can be transmitted through a serial port of a PC. The UDAM software has a characteristic that a tone adjustment curve is obtained using a comparatively small amount of data compared to the measured data of the prior art, based on a curve fitting function.

In order to an eliminate banding effect as one of the problems in the above-mentioned tone adjustment method, which is caused by a gamma curve which is a piecewise linear approximation, the present invention generates a compensation LUT for each of RGB channels. In order to generate the compensation LUT, a curve fitting algorithm is used.

The curve fitting supports that a trend of discrete data can be illustrated. For this, a value at an arbitrary point between the discrete data (sampled tone data) must be estimated. Therefore, the data must be illustrated as a curve to obtain a middle estimated value, and a complicated function can be changed to a simplified format. In this case, the function value must be calculated at an arbitrary number of discrete points. After that, the calculated values are illustrated as a simplified function using interpolation. Least square approximation serves to obtain an approximation function which is the most suitable for given data. Here, an error is obtained as the respective differences of values between given data and approximation function are squared and then all of the squared values are added. The most suitable approximation function is obtained by the following procedure. Namely, if a k-th polynomial in a following equation defines an approximation function, an error is defined as a difference between the given data and the polynomial.

For example, if points of the sampled data are (x1, y1), (xw, y2), ..., (xn, yn), the following equations can be obtained.

$$y = a_0 + a_1 x + a_2 x^2 + ... + a_k x^k$$

$$E^2 = \sum_{i=1}^{n} [(y_i - (a_0 + a_1 x_1 + ... a_k x_i^k))]^2$$

The optimum solution in least-squares regression are coefficient values of an approximation function minimizing the summation of the squares of the errors. Such a solution means that the most accurate approximate curve is searched for from given data using the least-squares regression.

After the above equations are differentiated by the coefficient of the k-th order approximation polynomial, if the resulting equations are equal to zero, they can be expressed by the following equations.

$$\frac{\partial (E^2)}{\partial a_0} = -2 \sum_{i=1}^{n} [y - (a_0 + a_1 x + ... + a_k x^k)] = 0$$

$$\frac{\partial (E^2)}{\partial a_1} = -2 \sum_{i=1}^{n} [y - (a_0 + a_1 x + ... + a_k x^k)] x = 0$$

$$\frac{\partial (E^2)}{\partial a_k} = -2 \sum_{i=1}^{n} [y - (a_0 + a_1 x + ... + a_k x^k)] x^k = 0$$

These equations can be expressed as follows, as the above equations are expanded.

$$a_0 n + a_1 \sum_{i=1}^{n} x_i + ... + a_k \sum_{i=1}^{n} x_i^k = \sum_{i=1}^{n} y_i$$

$$a_0 \sum_{i=1}^{n} x_i + a_1 \sum_{i=1}^{n} x_i^2 + ... + a_k \sum_{i=1}^{n} x_i^{k+1} = \sum_{i=1}^{n} x_i y_i$$

$$a_0 \sum_{i=1}^{n} x_i^k + a_1 \sum_{i=1}^{n} x_i^{k+1} + \ldots + a_k \sum_{i=1}^{n} x_i^{2k} = \sum_{i=1}^{n} x_i^k y_i$$

These equations are expressed in matrix form as follows.

$$
\begin{bmatrix}
n & \sum_{i=1}^{n} x_i & \cdots & \sum_{i=1}^{n} x_i^k \\
\sum_{i=1}^{n} x_i & \sum_{i=1}^{n} x_i^2 & \cdots & \sum_{i=1}^{n} x_i^{k+1} \\
\vdots & \vdots & \ddots & \vdots \\
\sum_{i=1}^{n} x_i^k & \sum_{i=1}^{n} x_i^{k+1} & \cdots & \sum_{i=1}^{n} x_i^{2k}
\end{bmatrix}
\begin{bmatrix}
a_0 \\ a_1 \\ \vdots \\ a_k
\end{bmatrix}
=
\begin{bmatrix}
\sum_{i=1}^{n} y_i \\
\sum_{i=1}^{n} x_i y_i \\
\vdots \\
\sum_{i=1}^{n} x_i^k y
\end{bmatrix}
$$

These equations are expressed in a Vandermonde Matrix as follows.

$$
\begin{bmatrix}
1 & x_1 & x_1^2 & \cdots & x_1^k \\
1 & x_2 & x_2^2 & \cdots & x_2^k \\
\vdots & \vdots & \vdots & \ddots & \vdots \\
1 & x_n & x_n^2 & \cdots & x_n^k
\end{bmatrix}
\begin{bmatrix}
a_0 \\ a_1 \\ \vdots \\ a_k
\end{bmatrix}
=
\begin{bmatrix}
y_1 \\ y_2 \\ \vdots \\ y_n
\end{bmatrix}
$$

The equation expressed in a matrix form can be expressed as Y=XA. Namely, when both sides are multiplied by $X^T$, the equation is changed to a form $X^T Y = X^T X A$, which is referred to as a Normal System. Here, a solution of the normal system is referred to as a Least Square Solution. Finally, a coefficient matrix of the approximation polynomial is obtained by the following equation.

$$A = (X^T X)^{-1} X^T Y$$

As such, the optimum solution (coefficient value) is substituted into the first equation to obtain an approximation polynomial. Afterwards, when values for 0~255 are substituted for an input x, 256 LUTs for each channel of RGB signals are generated. Therefore, a smooth approximation curve can be obtained from values of several measured data samples.

In curve fitting, a degree of smooth illustration for a trend of values of given data is closely related to an order of an approximation curve and the number of given data samples, which is known by experiment. Here, the number of measured data samples can be manually or automatically determined. Display apparatuses, such as, an LCD, a PDP, obtain a tone adjustment curve using 7 measured data samples. Also, a CRT obtains a tone adjustment curve using 8 measured data samples.

Substantial graphs obtained in various situations can be checked by simulating experiments. Consequently, from the simulated experiments using Matlab, it is recognized that the number of data samples is seven and it is possible to have a $6^{th}$ order approximation polynomial. When the number of data samples is decreased or the order is increased, the device cannot accurately pass the given data, but rather causes the data to deviate further form an accurate representation. Also, a phenomenon that an oscillating curve is generated. Therefore, the device cannot faithfully perform its operation.

Due to the function of the proposed curve fitting, the gamma curve of the prior art, which is piecewise linear approximation, can be smoothly changed as shown in FIG. 4. Also, a decrease of the number of measurement data samples makes it possible to reduce the time necessary for gamma adjustment in a production line and a manufacturing process is also simplified.

As mentioned above, all display apparatuses must perform a tone adjustment process which performs a correction of characteristics of display elements and an inverse gamma correction, to display desired images thereon. The inverse gamma correction of the tone adjustment processes serves to perform re-correction in display apparatuses which do not include a CRT. On the other hand, the gamma correction of the prior art was basically performed in an image source to comply with characteristics of CRTs. After characteristics of the display elements are recognized to adjust a tone adjustment process, compensation for characteristics is performed on the basis of the recognition, and a tone curve performing inverse gamma correction is obtained.

The tone adjustment process of the display apparatus is a process where a precise tone curve is obtained. A result of such a tone adjustment process depends on several processes as to whether a tone curve is precisely obtained and how many bits of data expresses the tone curve. Presently, the LCD projection TV is configured such that inputs and outputs, to and from the tone curve are digital data (8- bit) of 256 tones and digital data (10-bit) of 1024 tones. The tone adjustment process is used when the 10-bit tone curve in an LCD projection TV generates quantization noises such that obvious contour phenomena occur in images displayed on a TV display.

In the middle area of a tone curve, or the vicinity in which input tones are 100~220, since a slope of the tone curve is relatively gentle, outputs of 1024 tones cannot completely express variations input tones. Namely, although the input tones are different form each other, due to a depletion of output tones, the different input tones are mapped by the same output tone, which causes quantization noise. The quantization noise generates contours in images.

In order to resolve the problem, the quantization noise must be reduced to less than a predetermined level thereof, which cannot be sensed by users. For this, one of the methods is to increase the bit number of output tones of a tone curve. However, the method has disadvantages in that all hardware designs of the prior art must be changed and some of the display apparatuses, whose elements have a characteristic of a relatively steep slope, such as an LCD projection TV, must increase the bit number of output tones.

In order to resolve the above-mentioned problems, the present invention provides an error diffusion technique which is capable of almost completely removing contours without increasing the number of output tones of the prior art.

The error diffusion technique is a technique in half toning fields. "Half toning" is a technique in which images having various tones are displayed by printers having only two tones of black and white. If images are displayed by only two tones without the half toning technique being applied, seriously fatal contours appear on the displayed images. On the other hand, if the half toning technique is applied to images, users see what appear to be images displayed by several tones.

As such, the half toning technique is a technique such that users cannot effectively recognize relatively large quantization noise which is generated in a state wherein many tones, such as 256 tones, are displayed by two tones. The half toning technique is used to resolve a problem of a contour phenomenon due to tone depletion in an LCD projection TV.

There are two typical techniques in half toning technique, ordered dithering and error diffusion. The ordered dithering is a technique in which each tone is expressed by a matrix of two tones such that users can see what appear to be images that are displayed by a plurality of tones. The ordered dithering has an advantage in that, since it determines binary values for each tone based on a predetermined matrix, its process speed is rapid. On the other hand, the ordered dithering has a disadvantage in that regular patterns, which are objectionable, are generated in images.

The error diffusion technique is a technique in which each pixel is displayed by two tones and, if a pixel has an error, the error is diffused to pixels adjacent to the pixel having the error. Unlike the ordered dithering technique, the error diffusion technique has advantages in that it can provide a better quality of images and display all tones.

Here, the generated error is diffused to adjacent pixels while it passes through an error filter. As such diffusion is repeatedly performed throughout all images, such that binary coded images can be obtained. An error value may be generated at a position where the error diffusion is presently performed. In this case, the error value means that an output pixel is darker or brighter than an input pixel. Therefore, as the error is diffused to adjacent pixels, the adjacent pixels are brightened or darkened. Through such a process, the average brightness of a binary image pattern is similar to that of input images. As such, unlike the ordered dithering technique, the error diffusion technique can obtain a better quality of images without regular patterns.

The present invention introduces an error diffusion technique to an LCD projection TV in which contours appear. As mentioned above, the error diffusion technique is a technique whereby users cannot effectively recognize relatively large quantization noise which is generated in a state wherein many tones, such as 256 tones, are displayed by two tones. The error diffusion technique can resolve the problem of contour phenomenon due to tone depletion in an LCD projection TV. The error diffusion technique applied to the LCD projection TV can display the result of error diffusion based on 1024 tones but not 2 tones. Therefore, the contour can be effectively eliminated and thus users can hardly see any difference of image quality between error diffused images and original images.

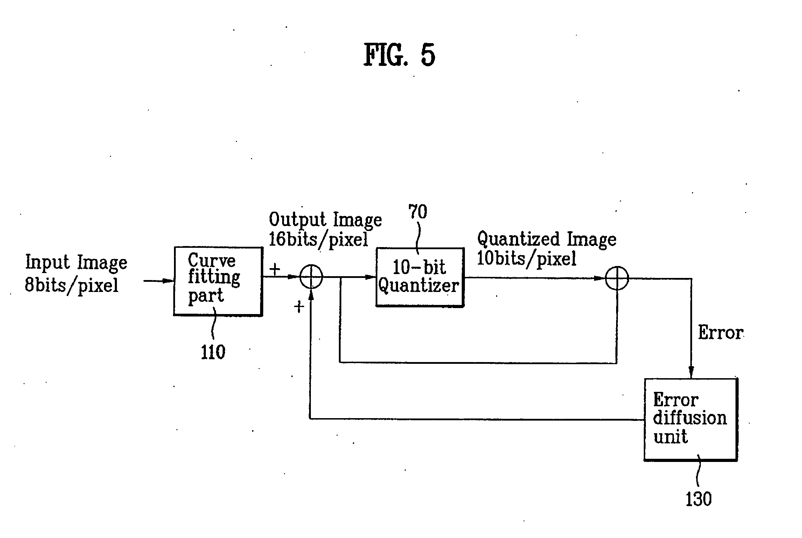

Referring to FIG. 5, a curve fitting part 110 receives an 8-bit signal and outputs a 16-bit signal. A 10-bit quantizer 70 converts the 16-bit signal from the curve fitting part 110 into a 10-bit tone. An error diffusion unit 130 adds the lower 5 bits (quantization noise) of a pixel which is presently processed for error diffusion to values of pixels adjacent to the presently processed pixel, and then outputs an image signal of 10 bits (10bits/pixel) in which the lower 5 bits of the presently processed pixel and 1bit for overflow are eliminated.

As a result, the UDAM chip 10 can effectively eliminate contour, due to quantization noise generated when tone is adjusted, using an error diffusion function thereof. Also, since the error diffusion technique adopted in the UDAM chip 10 can be identically applied to any tone curves, it can be also used in various display apparatuses including the LCD projection TV.

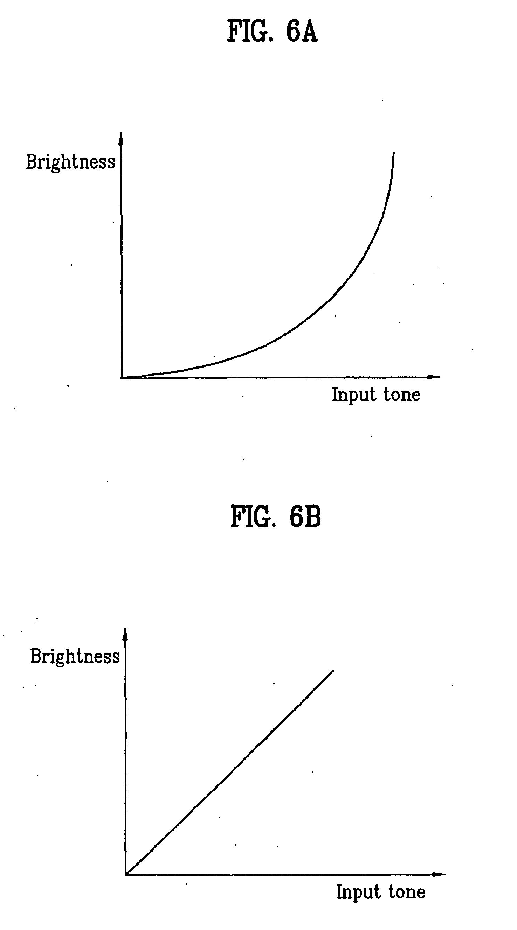

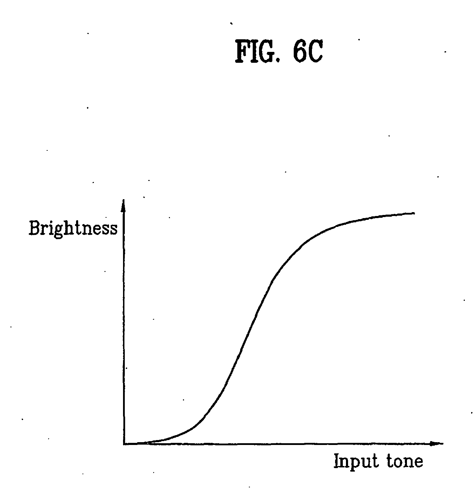

The final goal of the above-mentioned gamma correction serves to provide better images to users. In order to achieve optimum gamma correction, the characteristics of display apparatuses, such as an LCD, a PDP, an LCD projection, etc., must be considered on the basis of their respective displaying fashions. For example, as shown in FIG. 6A, an input voltage is non-linear to brightness in a CRT display apparatus. Also, as shown in FIG. 6B, since brightness of a PDP display apparatus is determined on the basis that increasing a duration of a driving signal proportionally increases the brightness of the image, the input voltage is linearly proportional to brightness. Therefore, a PDP TV receiving TV signals from a broadcasting station, which broadcasts with respect to CRT TVs, must perform gamma correction which is different from gamma correction of the CRT TVS. In addition, as shown in FIG. 6c, an LCD display apparatus has an input voltage-brightness relation which is different from the relation of the display apparatuses, such as a CRT, and a PDP. Since brightness is proportional to transmittance in the LCD display apparatus, the LCD display apparatus needs another gamma correction which is different from that of other display apparatuses, such as, a CRT, and a PDP.

The tone adjustment device proposed can perform gamma correction which is appropriate to any display apparatuses as information for gamma characteristics of respective display apparatuses is used.

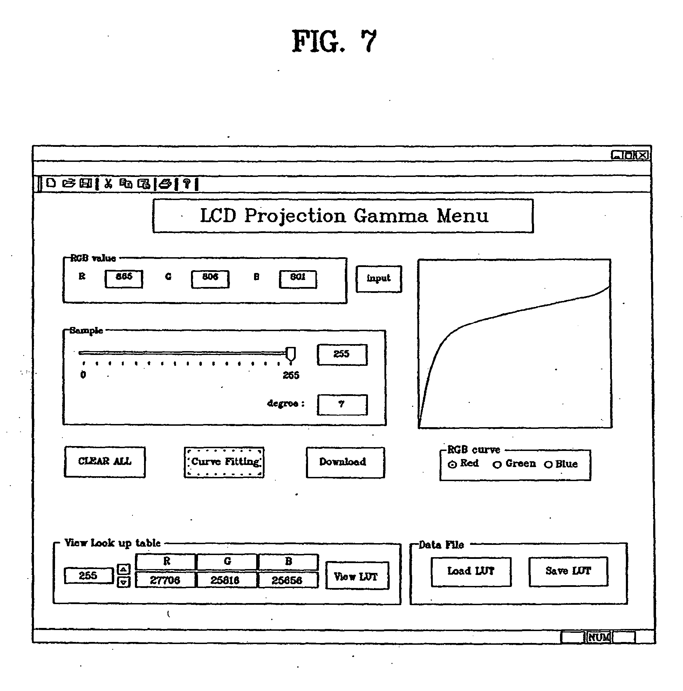

An example of a menu for setting a tone adjustment curve will now be described with reference to FIG. 7. A user can directly input respective gamma values of R, G, and B to the menu using an "RGB value" option, and select the number of sampled tone data using a "sample" option. When a "Clear All" button is selected, all of the stored tone adjustment curves are deleted. When a "Curve Fitting" button is selected, a curve fitting function is performed. When a "Download" button is selected, a tone adjustment curve is downloaded from the micro-controller 30 or the outside. Also, a user can check R, G and B values corresponding to respective input tones using "View Look Up Table," and also check respective gamma curves of R, G and B colors.

The described embodiments of the present invention propose a tone adjustment device which can be applied to various display apparatuses. The described tone adjustment device includes an image process chip which is capable of eliminating quantization noise using error diffusion, and software having a curve fitting function such that tone adjustment can be performed with less data than that of the prior art method.

Embodiments of the present invention can have advantages in that, since the tone adjustment device is designed such that it can be applied to all display apparatuses, and produce a better effect than a prior art tone adjustment method even though the amount of data is relatively small, efficiency of production lines can be increased. Also, embodiments of the present invention can have advantages in that, a UDAM chip and software can be directly applied to respective production lines VHDL and a windows programming.

It will be apparent to those skilled in the art that various modifications and variations can be made in the present invention without departing from the scope thereof. Thus, it is intended that the present invention covers the modifications and variations of this invention provided they come within the scope of the appended claims.

**Claims**

1. A method of adjusting tones of a display apparatus comprising the steps of:

sampling tone values according to voltage levels of received image signals;
generating a tone adjustment curve using the sampled tone values; and
adjusting tones of outputted images based on the tone adjustment curve.

2. The method as set forth in claim 1, wherein the sampling step includes the steps of:

   determining a number of tone values to be sampled; and
   sampling the tone values according to voltage levels of the received image signals using the determined number.

3. The method as set forth in claim 1 or 2, wherein the generating step includes the step of generating the tone adjustment curve as the sampled tone values are substituted into a predetermined equation.

4. The method as set forth in any preceding claim, further comprising the steps of:

   quantizing the image signals of 16bits/pixel to data of 10bits/pixel; and
   diffusing error of the image signals of a corresponding pixel to adjacent pixels.

5. The method as set forth in claim 4, wherein the error of the image signals is a lower 5 bits of the image signals of 16 bits.

6. A device of adjusting tones of a display apparatus comprising:

   a controller arranged to sample tone values according to voltage levels of received image signals, and to generate tone adjustment curves using the sampled tone values; and
   a curve fitting part arranged to adjust tones of outputted images based on the generated tone adjustment curve.

7. The device as set forth in claim 6, wherein the controller is arranged to substitute the sampled tone values to a predetermined equation to generate the tone adjustment curves.

8. The device as set forth in claim 6, wherein the curve fitting part is arranged to convert the image signals of 8bits/pixel to image signals of 16bits/pixel.

9. The device as set forth in claim 6, wherein the curve fitting part is arranged to store more than one tone adjustment curve in a Look-up table format.

10. The device as set forth in claim 6, further comprising:

    a quantizer arranged to quantize the image signals of 16bits/pixel outputted from the curve fitting part to data of 10bits/pixel; and
    an error diffusion unit arranged to diffuse error of the image signals of a corresponding pixel to adjacent pixels.

11. The device as set forth in claim 10, wherein the error diffusion unit is arranged to diffuse a lower 5 bits of the image signals of 16 bits/pixel to adjacent pixels.

12. The device as set forth in claim 6, further comprising:

    an interface unit arranged to transmit the tone adjustment curve outputted from the controller to the curve fitting part; and
    a line buffer arranged to output image signals of 16bits/pixel after receiving the image signals from the curve fitting part.

13. A method of adjusting tones of a display apparatus comprising the steps of:

    sampling respective tones of red (R), green (G), and blue (B) signals according to respective voltage levels of the R, G, and B signals which has been received;
    generating tone adjustment curves corresponding to the respective R, G, B signals using the sampled tone values;
    storing the tone adjustment curves in a memory; and
    adjusting tones of the R, G, and B signals based on the stored adjustment tone curves.

**14.** A method as set forth in claim 6, wherein the step of generating includes the step of substituting the R, G, and B signals to a predetermined equation to generate the tone adjustment curve.

**15.** The method as set forth in claim 13, further comprising the steps of:

quantizing the R, G and B signals of 16bits/pixel to data of 10bits/pixel, respectively; and
diffusing the R, G, and B signals of a lower 5 bits in each pixel to adjacent pixels.

**16.** A device of adjusting tones of a display apparatus comprising:

a controller arranged to sample tone values of red (R), green (G) and blue (B) signals according to respective voltage levels of the R, G, and B signals which have been received, and to generate tone adjustment curves corresponding to the respective R, G, and B signals, using the sampled tone values;
a memory arranged to store the tone adjustment curves therein; and
a curve fitting part arranged to adjust tones of the R, G, and B signals based on the generated tone adjustment curves stored in the memory.

**17.** The device as set forth in claim 16, wherein the controller is arranged to substitute the sampled tone values of the R, G and B signals to a predetermined equation to generate the tone adjustment curves.

**18.** The device as set forth in claim 16, wherein the curve fitting part is arranged to convert the R, G, and B signals of 8bits/pixel to R, G, and B signals of 16bits/pixel, respectively.

**19.** The device as set forth in claim 16, wherein the curve fitting part includes a menu for changing and/or setting the tone adjustment curves.

**20.** The device as set forth in claim 16, further comprising:

a quantizer arranged to quantize the R, G, and B signals of 16bits/pixel to data of 10bits/pixel; and
an error diffusion unit arranged to diffuse the R, G, and B signals of a lower 5 bits in each pixel to adjacent pixels.

# FIG. 1

# FIG. 2

# FIG. 3

Output signal →

Input signal →

# FIG. 4

Output signal →

Input signal →

# FIG. 5

Input Image 8bits/pixel → Curve fitting part (110) → Output Image 16bits/pixel → + ⊕ + → 10-bit Quantizer (70) → Quantized Image 10bits/pixel → ⊕ → Error → Error diffusion unit (130)

EP 1 729 527 A2

## FIG. 6A

## FIG. 6B

FIG. 6C

# FIG. 7